Europäisches Patentamt

**European Patent Office**

Office européen des brevets

(11) Publication number: **0 202 105**
**A2**

# EUROPEAN PATENT APPLICATION

(21) Application number: **86303622.4**

(51) Int. Cl.⁴: **G 02 B 21/00**

(22) Date of filing: **13.05.86**

(30) Priority: **13.05.85 GB 8512045**

(43) Date of publication of application:
**20.11.86 Bulletin 86/47**

(84) Designated Contracting States:
**AT BE CH DE FR GB IT LI LU NL SE**

(71) Applicant: **IBT-DUBILIER LIMITED**
**7, Suffolk Way Drayton Road**
**Abingdon Oxon, OX14 5JX(GB)**

(72) Inventor: **Sheffield, Kenneth John William**
**Hall Barn Bitterrell**
**Eynsham Oxon(GB)**

(74) Representative: **Boydell, John Christopher et al,**
**Stevens, Hewlett & Perkins 5 Quality Court Chancery**
**Lane**
**London, WC2A 1HZ(GB)**

(54) **Scanning microscope.**

(57) A vibratory specimen stage for a scanning microscope, said stage (7) being mounted within a support frame (8) in such a way as to enable scanning movement to be effected in the plane of the drawing (the X-Y plane). The stage is attached to the frame by means of four leaf springs (9, 10, 11, 12) made of sheet material and scanning movement is effected in the X-direction by a pair of linear motors (15, 16) and in the Y-direction by a further pair of linear motors (17, 18).

FIG.2

EP 0 202 105 A2

stage, which link member is caused by the motor to reciprocate backwards and forwards in order to cause corresponding movement of the stage with respect to the support frame.   The exact form of this reciprocatory movement depends upon the desired pattern of scanning and is not of direct concern to the present invention.

The link members may need to be jointed in order to allow movement in both the X and Y directions. However, in one embodiment, a further support frame is provided which itself mounts the first support frame by means of further leaf springs.   In this latter arrangement the drive means, linear motors or whatever, for each of the X and Y directions can be mounted on a separate support frame which enable a rigid link member to be used and also, incidentally has the advantage that the X motion causes the minimum interference with the Y motion and vice versa.

The teaching of the invention can be applied to microscopes both of the reflective and of the transmission type.   In the latter case, where the radiation passes through the object, the stage is made from radiation-transparent material.

In order that the invention may be better understood, several embodiments thereof will now be described by way of example only and with reference to the accompanying drawings in which:-

Figure 1 is a diagrammatic view of an optical scanning microscope of the transmission type showing the layout of the various components; and

Figures 2 to 5 are diagrammatic views, looking in the Z direction, of a vibratory stage for supporting and scanning the object in the microscope of Figure 1.

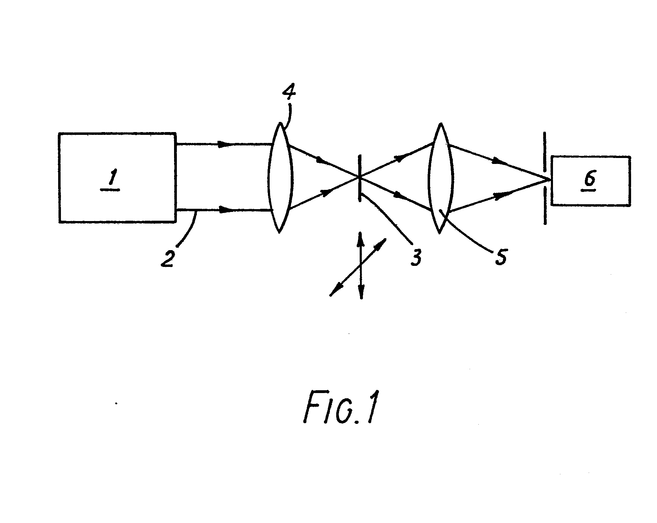

Referring to Figure 1 the basic microscope comprises a laser source 1 providing a collimated beam 2 of radiation.   The radiation is brought to a focus at the plane of an object 3 by means of an objective lens 4.    After transmission through the object, the beam is passed through a further lens 5 which brings it to a focus at a detector 6.    The output signal from the detector 6 is amplified and displayed.

Although not shown in Figure 1 for clarity, the object 3 is mounted on a platform which is moved in the object plane to effect scanning of the object relative to the incident beam, thus enabling a complete picture of the object or part thereof to be built up.    Various methods of scanning may be employed, the most common being similar to raster scanning used in conventional TV cathode ray tubes.    For correct focussing it is important that the object remains in the object plane during scanning, this being the plane which crosses the optical axis of the microscope at a right angle at the point at which the beam is brought to a focus.    For convenience the optical axis is generally referred to as the Z axis with the two mutually orthogonal directions of scanning being the X axis and the Y axis, both in the object plane.    It is to be noted, however, that the X and Y axes do not have to be orthogonal, although orthogonal axes are assumed throughout the present discussion.

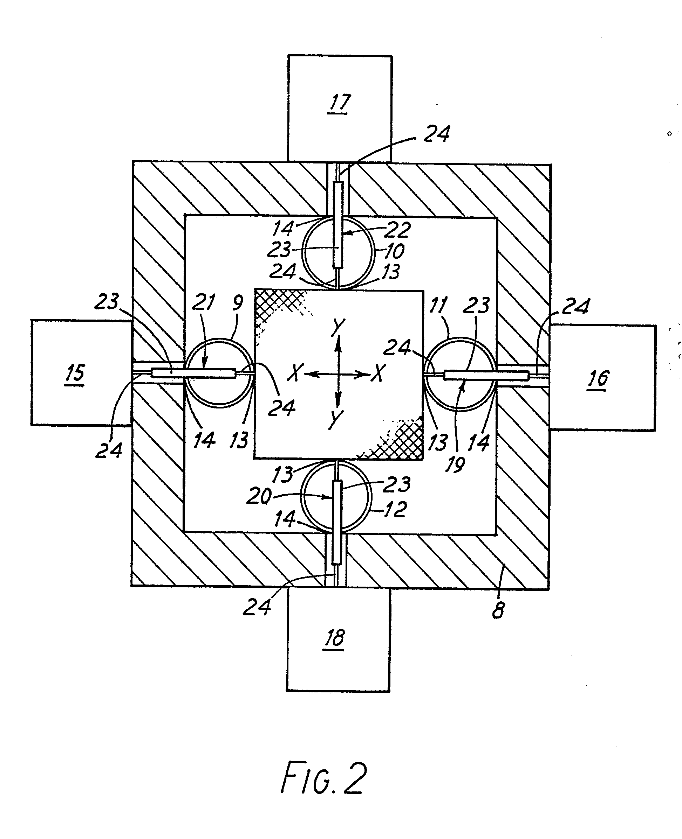

The stage and its associated scanning means are shown in more detail in Figures 2 to 5.    Referring firstly to Figure 2 there is shown a simple form in which the stage, shown under reference 7, is movably mounted within a support frame 8 by means of four leaf springs 9, 10, 11 and 12.    The plane of Figure 2 is parallel with the object plane and, when seen in this plane each spring is generally circular in shape and is attached at a respective first connection point 13 to the stage 7 and at a respective second connection point 14, diametrically opposite to the first, to the inside surface of the frame 8.    Being leaf springs, it is understood that the springs have depth in the Z-direction.    The X and Y directions are shown on the drawing.    For each of these directions a respective scanning means is provided.   Each scanning means takes the form of a pair of linear motors, 15, 16 for the X direction and 17, 18 for the Y direction. The motors of each pair act oppositely to each other in order to cause scanning movement of the stage 7 in the X-Y plane.   To this end each motor is connected to a respective edge of the stage 7 by a respective link member 19 to 22.   Each link member comprises a rigid central portion 23 and outermost flexible portions 24, the latter comprising a piece of sheet flexible material attached in such a way as to transmit the backwards and forwards movement of the linear motors to the stage 7 and also to allow the link members to pivot in the X-Y plane but not in the Z plane.   In order to achieve this the sheets making up the flexible portions 24 lie in a plane parallel to the Z axis.

Each leaf spring is formed from a sheet of flexible material such as beryllium copper or phosphor bronze which is bent into the shape shown and attached in the manner described above.   The sheet is bent in such a way that its active part - i.e. the part forming the spring - is tangent to planes parallel to the Z axis.   This ensures the minimum of movement of the stage in the Z direction.   Clearly however the stage can be moved in any direction within the X-Y plane, this motion being accomplished by either compressing or rolling of the leaf springs 9 to 12.

Scanning is effected by supplying suitable electrical signals to the linear motors whereupon appropriate movement of the link members and hence the stage 7 occurs.

For a transmission microscope such as that shown in Figure 1, the stage 7 is made transparent to the radiation being used.

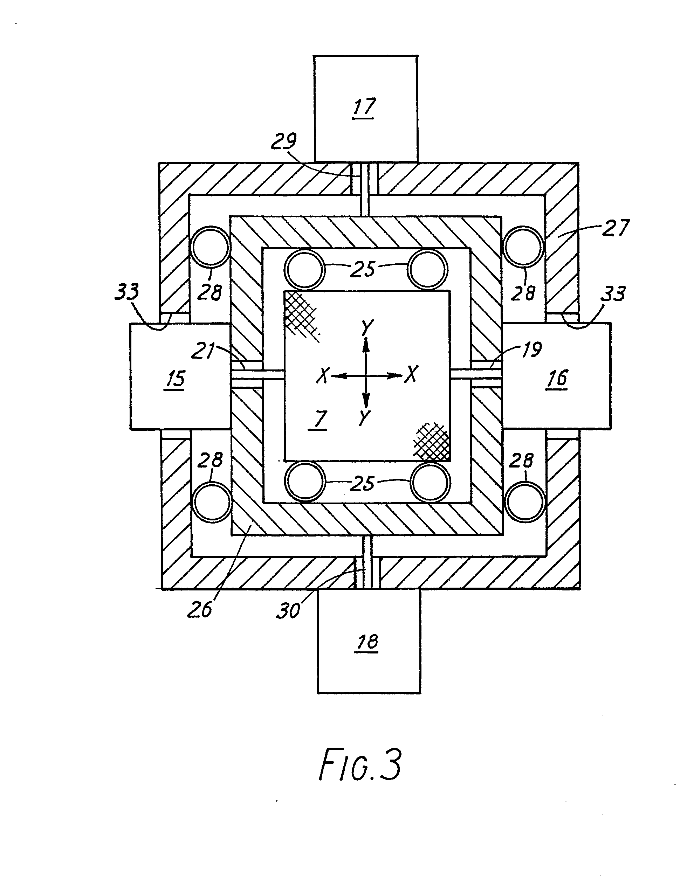

Reference is now made to Figure 3 which shows a second embodiment of the vibratory stage 7.   In this

case the stage 7 is mounted by means of leaf springs 25 such as those described above on a first mounting frame 26 which is itself mounted within a second mounting frame 27 by further leaf springs 28. Attached to the inner frame 26 are the linear motors 15, 16 for the X direction; attached to the outer frame 27 are the linear motors 17, 18 for the Y direction. Apertures 33 are formed in the outer frame 27 to accommodate the linear motors 15 and 16 and allow the full range of movement thereof relative to the outer frame. In the case of the X direction motion is transmitted from the linear motors 15, 16 direct to the stage 7 via link members 19 and 21 which can be rigid (since there does not need to be any relative movement between the stage 7 and inner frame 26 in the Y direction). In the case of the Y direction motion is transmitted from the linear motors 17, 18 to the stage 7 via link members 29, 30 which latter act on the inner frame 26 and thence via springs 25 to the stage.

The advantage of this arrangement over that described in relation to Figure 2 is that the X motion does not interfere with the Y motion and vice versa. Also it should be noted that the rate of the leaf springs when compressed across their diameter is greater than when they are rolled. It is therefore possible to obtain greater control over the stage as in each case the X and Y motions are made against the rolling direction of the respective springs and not, as in Figure 2, against some springs in rolling mode and others in diametric compression. The arrangement of Figure 3 also dispenses with the need for flexible link members between the motors and the moving elements.

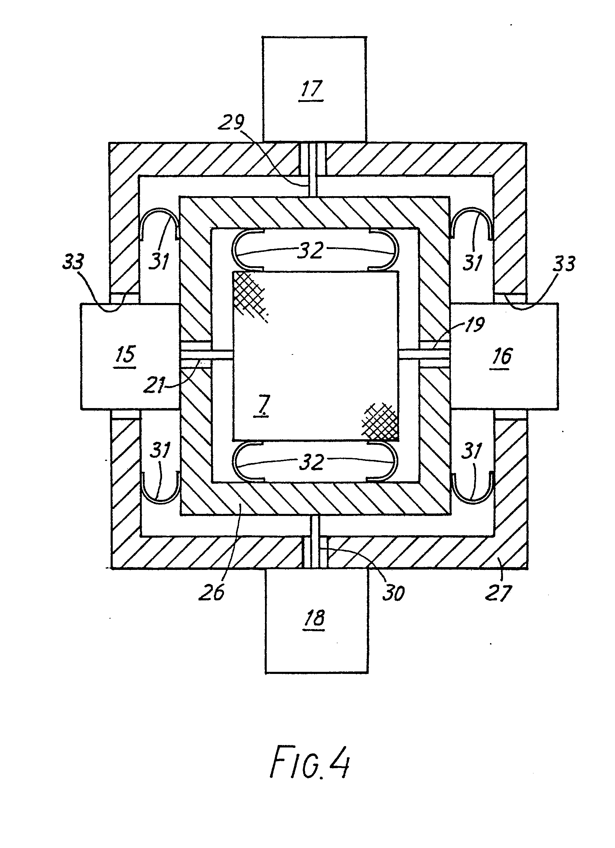

Figure 4 illustrates an arrangement similar to that of Figure 3 but in which the circular leaf springs are replaced by C-shaped leaf springs. Springs 31 mount the inner frame within the outer frame and are each attached at one end to the inner frame and at the other end to the outer frame; springs 32 mount the stage 7 within the inner frame and are each attached at one end to the stage and at the other end to the inner frame.

Figure 5 illustrates an arrangement similar to that of Figure 2 but in which the springs are placed at the corners of the support frame 8, the stage 7 being conveniently of round shape.  This arrangement provides a more even spring rate in the various possible directions of movement within the X-Y plane.

In all cases, some care needs to be taken in the design of the stage support springs.  For example the greater the width of the springs - i.e. the greater their extent in the Z direction - the greater their resistance to twisting and therefore the greater the resistance of the stage to movement along the Z axis. Resistance to Z axis movement can also be increased by the simple expedient of making the sheet material from which the springs are made thicker.  However this at the same time increases the rate of the springs and hence the power needed to move the stage.  A compromise must therefore be reached between acceptable stiffness in the springs as against the power needed to be exerted by the linear motors to move the stage.  To this end the use in all of the described embodiments of linear motors for each direction of scanning assists in that more power is available to move the stage.

CLAIMS

1. Specimen mounting apparatus for a scanning microscope, said apparatus comprising a support frame, a stage on which a specimen to be viewed may be mounted, means for mounting said stage in said support frame in such a way that the stage is able to execute scanning movement in an X-Y plane transverse to the main (Z) axis of the microscope, said mounting means comprising a plurality of leaf springs each comprising a length of flexible sheet material attached on the one hand to the stage and on the other hand to the support frame, and being formed therebetween into the shape of an arc, the springs being orientated such that the plane of the sheet material is parallel to the Z-axis, and scanning means for causing the stage to execute said scanning movement.

2. Apparatus as claimed in claim 1 wherein the springs are generally circular in the X-Y plane and are attached at respective opposite ends of a diameter of the circle to the stage and to the support frame, as aforsaid.

3. Apparatus as claimed in claim 1 wherein the springs are generally C-shaped in the X-Y plane with respective opposite ends of the spring being attached to the stage and to the support frame.

4. Apparatus as claimed in claim 1 wherein the springs are generally S-shaped in the X-Y plane with respective opposite ends of the spring being attached to the stage and to the support frame.

5. Apparatus as claimed in any one of the preceding claims comprising a further support frame, and further means for mounting said first-mentioned support frame in said further support frame, said first-mentioned mounting means being operable to permit movement of said stage in just one of said X or Y directions, and said further mounting means being operable to permit movement of said stage in just the other of said X or Y directions.

6. Apparatus as claimed in claim 5 wherein said further mounting means comprises a plurality of further leaf springs, each comprising a length of flexible sheet material attached on the one hand to the first-mentioned support frame and on the other hand to said further support frame and being formed therebetween into the shape of an arc, the springs being orientated such that the plane of the sheet material is parallel to the Z-axis.

7. Apparatus as claimed in any one of the preceding claims wherein said scanning means comprises at least one linear motor for each of said X and Y directions, together with respective coupling means for coupling the motion of each linear motor either directly or indirectly to said stage.

FIG.1

FIG. 2

FIG.3

FIG. 4